(19) Europäisches Patentamt
European Patent Office
Office européen des brevets

(11) **EP 2 605 411 A2**

(12) **EUROPEAN PATENT APPLICATION**

(43) Date of publication:
**19.06.2013 Bulletin 2013/25**

(51) Int Cl.:
*H04B 1/04* (2006.01)   *H04B 1/52* (2006.01)

(21) Application number: **12006723.6**

(22) Date of filing: **26.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.12.2011   US 201113328794**

(71) Applicant: **Broadcom Corporation**
**Irvine, CA 92617 (US)**

(72) Inventors:
• **Kahrizi, Masoud**
  **Irvine**
  **CA 92614 (US)**

• **Vakilian, Nooshin**
  **Irvine**
  **CA 92603 (US)**
• **Etemadi, Farzad**
  **Laguna Niguel**
  **CA 92677 (US)**

(74) Representative: **Jehle, Volker Armin et al**
**Bosch Jehle Patentanwaltsgesellschaft mbH**
**Flüggenstrasse 13**
**80639 München (DE)**

(54) **Radio transceiver with IM2 mitigation**

(57)   A structure and method to reduce second order intermodulation (IM2) of a receiver in a transceiver is provided. Specifically, the output of a detector in a transmit power control loop is utilized to calculate IM2 and the value is subtracted from a receive path to mitigate IM2 in a wireless communication devices. Alternatively, the detector can be placed in one or more receive paths to include receiver front-end passband variation.

FIG. 3

EP 2 605 411 A2

**Description**

BACKGROUND

Field of the Invention

The invention relates generally to transceiver architecture in a wireless portable communications device.

Background Art

In recent years, digital communication devices have evolved to support more than simple data and audio communication functionality. 3G and 4G systems are being designed and improved to increase the amount of efficient data exchange. Within these 3G and 4G systems, current transceivers that contain singular transmit paths and one or more receive paths suffer from degradation of the received signals due to leakage of the transmit signals into the respective receiver paths. Leakage of modulated transmit signals into a receiver path degrades the quality of received signals due to second order intermodulation (IM2) generated from second order nonlinearity (IP2) of a receiver mixer. The presence of a plurality of receive paths further complicates design solutions for minimizing IM2 to protect the quality of IP2 within a system. The quality of IP2 is imperative for efficient data transfer. With the increase in the use of 4G systems, the improvement of IP2 becomes more pressing since 4G applications supporting 3GPP LTE standard requires higher IP2 than 3G WCDMA.

One way to improve IP2 in a transceiver is to increase the distance between the transmit path and the receive paths in a transceiver design. However, such a design leads to bigger substrate size and higher cost. Additionally, a distance based solution does not address the degradation of IP2 due to varying temperatures.

**BRIEF SUMMARY OF THE INVENTION**

According to an aspect, a transceiver is provided, comprising:

a transmit path configured to transmit a transmit signal through an antenna, the transmit path including,
a power amplifier configured to couple to the antenna, and amplify the transmit signal prior to transmission;
an envelope detector configured to detect an envelope of the transmit signal at the output of the power amplifier;
a receive path configured to receive a receive signal from the antenna and to output a receive baseband signal, the receive path also receiving a transmit leakage signal from said transmit path, the receive path including
a second order intermodulation (IM2) calculation module configured to square the envelope of the transmit signal to produce an IM2 correction signal, the IM2 correction signal representative of signal distortion caused by the transmit leakage signal;
a summer module to subtract IM2 correction signal from the digital receive signal.

Advantageously, the envelope detector is part of a power control loop providing power control for the transmit signal.

Advantageously, the IM2 calculation module comprises:

an analog-to-digital converter (ADC) configured to digitize the envelope of the transmit signal;
a processor module configured to square the digitized envelope of the transmit signal to generate the IM2 correction signal.

Advantageously, the processor is further configured to scale the IM2 correction signal in amplitude to improve mitigation of the signal distortion caused by the transmit leakage signal.

Advantageously, the duplexer coupled to the transmit path at a first port of the duplexer, the receive path at a second port of the duplexer, and the input port of the antenna at a third port of the duplexer, further comprising a duplexer configured to separate the transmit and receive signals an input port of the antenna.

Advantageously, the duplexer leaks a portion of the transmit signal from the first port to the second port to cause the transmit leakage signal in the receive path.

Advantageously, the transceiver further comprises a second receive path configured to receive a second receive signal from a second antenna and to output a second receive baseband signal, the receive path also receiving a second transmit leakage signal caused by insufficient isolation between the first and second antennas.

Advantageously, the second receive path further comprises:

a second IM2 correction module configured to generate a second IM2 correction signal, the second IM2 correction signal representative of signal distortion caused by the second transmit leakage signal in the second receive path; and a second summer module configured to subtract the second IM2 correction signal from the second receive baseband signal.

According to an aspect, a transceiver comprises:

a transmit path configured to transmit a transmit signal through an antenna, the transmit path including, a power amplifier configured to couple to the antenna and amplify the transmit signal prior to transmission; a receive path configured to receive a receive signal from the antenna and to output a receive baseband signal, the receive path also receiving a transmit leakage signal from the transmit path, the receive path including, an envelope detector configured to detect an envelope of the transmit leakage signal; a second order intermodulation (IM2) calculation module configured to square the envelope of the transmit leakage signal to produce an IM2 correction signal, the IM2 correction signal representative of signal distortion caused by the transmit leakage signal; a summer module to subtract IM2 correction signal from the digital receive signal.

Advantageously, the IM2 calculation module comprises:

an ADC configured to digitize the envelope of the transmit signal; a processor module configured to square the digitized envelope of the transmit signal to generate the IM2 correction signal.

Advantageously, the processor is further configured to scale the IM2 correction signal in amplitude to improve mitigation of the signal distortion caused by the transmit leakage signal.
Advantageously, the receive path further comprises:

a variable gain amplifier coupled to the antenna, for amplifying the receive signal; wherein the envelope detector detects the envelope of the transmit leakage signal at the output of the variable gain amplifier.

Advantageously, the transmit leakage signal is substantially larger in amplitude than the receive signal, so that an output of the envelope detector substantially represents the envelope of the transmit leakage signal.
Advantageously, the transceiver further comprises:

a duplexer coupled between the variable gain amplifier and the antenna, and configured to separate the transmit and receive signals at an input port of the antenna; wherein the envelope detector captures any variation in frequency response of the duplexer due to its placement in the receive path of the transceiver.

Advantageously, the transceiver further comprises a second receive path configured to receive a second receive signal from a second antenna and to output a second receive baseband signal, the receive path also receiving a second transmit leakage signal caused by insufficient isolation between the first and second antennas.
Advantageously, the second receive path further comprises:

a second envelope detector configured to detect an envelope of the second transmit leakage signal; a second order intermodulation (IM2) calculation module configured to square the envelope of the second transmit leakage signal to produce a second IM2 correction signal, the second IM2 correction signal representative of signal distortion caused by the second transmit leakage signal; a second summer module to subtract second IM2 correction signal from the digital receive signal.

According to an aspect, a method for reducing second order intermodulation (IM2) in a receiver portion of a transceiver comprises:

detecting an envelope of a transmit signal that is generated in a transmitter portion of the transceiver; converting the detected envelope from an analog signal to a digital signal; filtering the digital signal; squaring the filtered signal to produce an IM2 correction signal, the IM2 signal representative of signal distortion caused by leakage of the transmit signal into the receiver portion of the transceiver; and
subtracting the IM2 signal from a received signal to produce a baseband received signal.

Advantageously, the distortion is second order distortion caused by a mixer in the receiver portion operating on the leakage of the transmit signal into the receiver portion.

Advantageously, the method further comprises:

subtracting the IM2 signal from a second received signal to produce a second baseband receive signal; and
wherein the first receive signal is processed by a first receive path of the transceiver, and
wherein the second receive signal is processed by a second receive path of the transceiver.

Advantageously, detecting an envelope of the transmit signal comprises measuring the amplitude of the transmit signal over time at the output of a power amplifier located in the transmitter.

## BRIEF DESCRIPTION OF THE DRAWINGS/FIGURES

The accompanying drawings, which are incorporated herein and form a part of the specification, illustrate the present disclosure and, together with the description, further serve to explain the principles of the disclosure and to enable a person skilled in the pertinent art to make and use the disclosure.

FIG. 1 (Prior Art) is a block diagram of a conventional transceiver.

FIG. 2 (Prior Art) is a block diagram of another conventional transceiver.

FIG. 3 is a block diagram of a transceiver having IM2 mitigation, according to an embodiment of the disclosure.

FIG. 4 (Prior Art) is a further detailed block diagram of a known transceiver.

FIG. 5 (Prior Art) is a further detailed block diagram of another known transceiver.

FIG. 6 is a further detailed block diagram of a transceiver having IM2 mitigation, according to an embodiment of the disclosure.

FIG. 7 shows a flowchart providing example steps for mitigation of IM2 in a transceiver environment, according to an embodiment of the disclosure.

FIG. 8 is a further detailed block diagram of another transceiver having IM2 mitigation, according to an embodiment of the disclosure.

The present disclosure will now be described with reference to the accompanying drawings. In the drawings, like reference numbers indicate identical or functionally similar elements. Additionally, the left-most digit(s) of a reference number identifies the drawing in which the reference number first appears.

## DETAILED DESCRIPTION

It is noted that references in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Furthermore, it should be understood that spatial descriptions (e.g., "above", "below", "left," "right," "up", "down", "top", "bottom", etc.) used herein are for purposes of illustration only, and that practical implementations of the structures described herein can be spatially arranged in any orientation or manner.

*Conventional Transceiver*

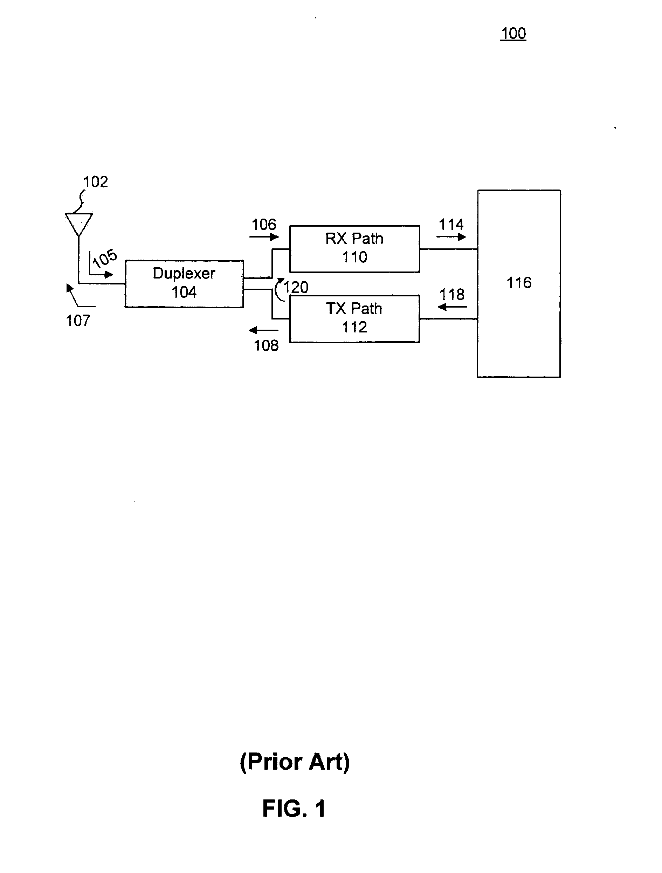

FIG. 1 is a block diagram of a conventional transceiver. Transceiver 100 includes an antenna 102 and a duplexer 104. The antenna 102 both transmits a filtered Radio Frequency (RF) transmit signal (TX signal) 107 and receives a RF receive signal (RX signal) 105.

During transmission, Baseband Integrated Circuit (BBIC) 116 provides a baseband TX signal 118 to the TX path 112. The TX path 112 provides a TX signal 108 to the duplexer 104. After being filtered by one of the filters (not illustrated) in the duplexer 104, the filtered TX signal 107 is provided to the antenna 102 for wireless transmission. A transmit path of the transceiver 100 can be described to include antenna 102, duplexer 104 and TX path 112.

During receive, after RX signal 105 is filtered by one of the filters (not illustrated) in the duplexer 104, a filtered RX signal 106 is then provided to a RX path 110. The baseband RX signal 114 from the RX path 110 is then provided to the BBIC 116. The BBIC 116 conducts decoding of the baseband RX signal 114 and final data processing. A receive path of the transceiver 100 can be described to include antenna 102, duplexer 104 and RX path 110.

The duplexer 104 is configured to separate the transmit and receive signals using filtering, but it is an imperfect device and provides finite isolation. Therefore, some portion of the transmit signal energy from the transmit path is coupled into the receive path of the transceiver 100, often referred to as TX leakage 120. Therefore, elements in the receive path including the baseband RX signal 114 are impacted by the TX leakage 120. The TX leakage can cause significant signal distortion in the RX path 110, especially considering that the signal strength of the TX leakage signal is typically much larger than that of any receive signal that has suffered significant channel attenuation.

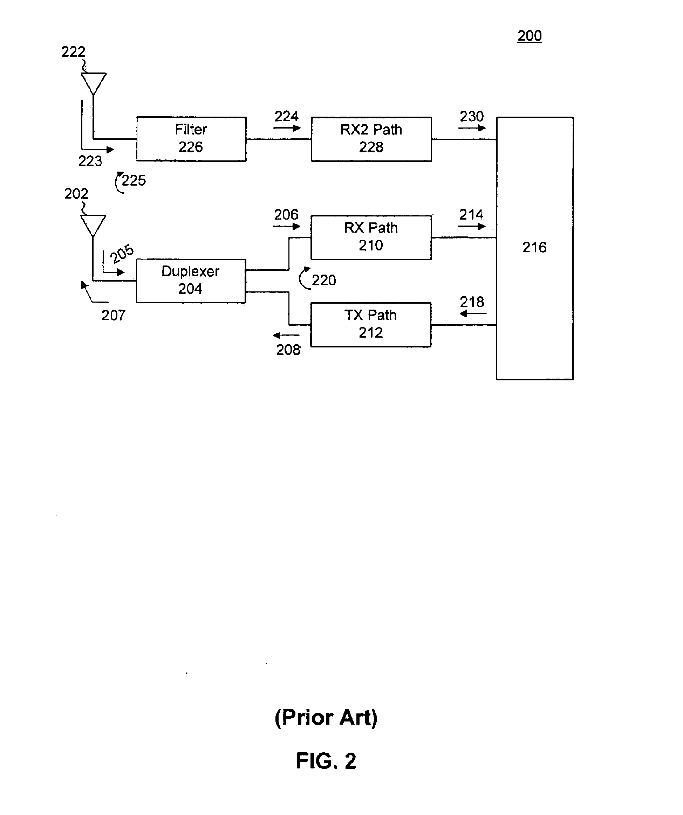

FIG. 2 is block diagram of another known transceiver. Transceiver 200 includes an antenna 202 and second antenna 222. The antenna 202 both transmits a filtered TX signal 207 and receives a RX signal 205, while antenna 222 only receives a secondary RX (RX2) signal 223.

During transmission through antenna 202, BBIC 216 provides a baseband TX signal 218 to a TX path 212. The TX path 212 provides a TX signal 208 to the duplexer 204. After being filtered by one of the filters (not illustrated) in the duplexer 204, the filtered TX signal 207 is provided to the antenna 202 for wireless transmission. A transmit path of the transceiver 200 comprises of antenna 202, duplexer 204 and TX path 212.

During receive through antenna 202, after RX signal 205 is filtered by one of the filters (not illustrated) in the duplexer 204, a filtered RX signal 206 is then provided to a RX path 210. A processed baseband RX signal 214 from the RX path 210 is then provided to the Baseband Integrated Circuit (BBIC) 216. A first receive path of the transceiver 200 comprises of antenna 202, duplexer 204 and RX path 210.

During receive through antenna 222, a secondary RX signal 223 is received by the second antenna 222. After RX2 signal 223 is filtered by filter 226, a filtered RX2 signal 224 is provided to a RX2 signal path 228. A baseband RX signal 230 from the RX2 path 228 is then provided to the BBIC 216. A second receive path of the transceiver 200 comprises of antenna 222, filter 226, and RX path 228.

In the transceiver 200, some portions of the transmit signal energy, referred to as TX leakage are coupled from the transmit path into the respective receive paths of the transceiver 200. The duplexer 204 is an imperfect device and provides limited isolation, between the transmit path and the first receive path which both share antenna 202. Furthermore, TX leakage 225 impacts the second receive path 228 that utilizes antenna 222 by virtue of the lack of isolation between the respective antennas 202 and 222. Therefore, the two distinct receive paths that operate on the baseband RX signal 214 and the baseband RX signal 230 respectively are impacted by the TX leakage.

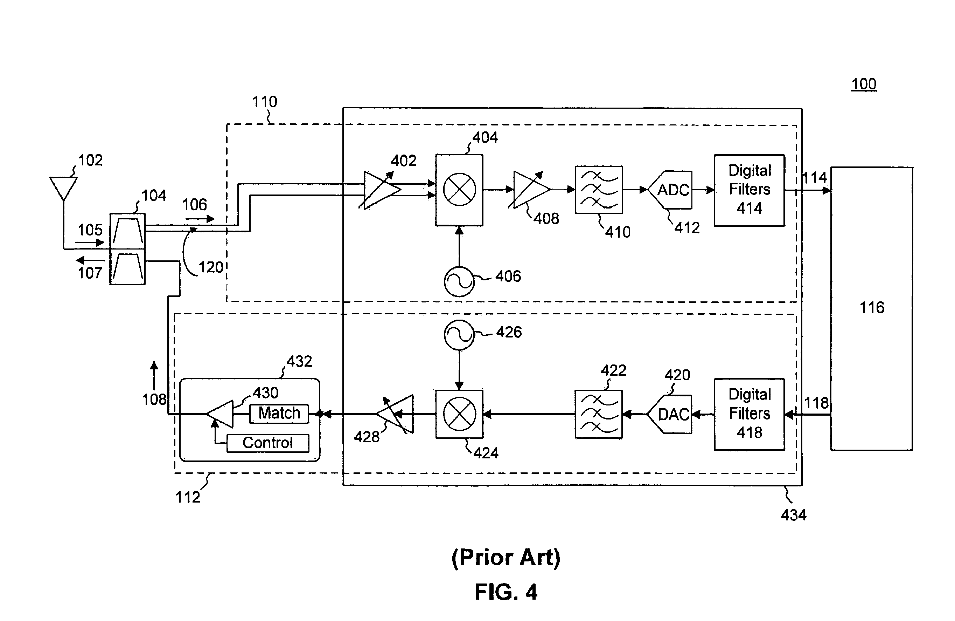

FIG. 4 is a further detailed block diagram of a known transceiver that is shown in FIG. 1 and described below.

During signal transmission, baseband TX signal 118 received from BBIC 116 is processed by the TX path 112 having digital filters 418, digital to analog converter (DAC) 420, analog low-pass filter 422, up-converter mixer 424, and variable amplifier 428. Specifically, after digital filtering 418 and conversion to analog by DAC 420, the resulting analog signal is filtered by filter 422, and then up-converted by mixer 424 using LO 426. The up-converted output is provided to variable amplifier 428 that serves as a driver for the external power amplifier 430 within TX power control loop 432. The output TX signal 108 is provided to the duplexer 104 which filters it and provides the filtered TX signal 107 to the antenna 102 for transmission.

During receive, the RX signal 106 is processed by the RX path 110, having a variable gain amplifier 402, a down-converter mixer 404, a variable gain amplifier 408, an analog low-pass filter 410, an analog-to-digital converter (ADC) 412, and digital filters 414. Specifically, after amplification by variable gain amplifier 402, mixer 404 down-converts the received signal using local oscillator 406, the down-converted output of which is further amplified and filtered by amplifier 408 and analog filter 410, respectively. The ADC 412 receives the filtered baseband output and converts the baseband signal to digital, which is further filtered by digital filter 414, to produce the baseband signal 114 for BBIC 116.

As indicated above, TX leakage signal 120 enters the receive path 110 due finite isolation of the duplexer 104. Given the relatively large signal strength of the TX leakage signal 120, signal distortion can occur in the RX path 110 due to non-linear processing. For example, second order intermodulation (IM2) distortion can occur at the output of mixer 404 due to the non-linear processing of the mixer. IM2 distortion is particularly troublesome because it results in baseband interference that falls directly in-band with the desired receive signal. The effect of the IM2 distortion from transmit signal leakage can be shown by the following equation:

$$A_{tx}^2(t) \left[ \frac{1 \mp cos2\omega_{tx}(t)}{2} \right] \qquad (1)$$

where $A_{tx}(t)$ is the amplitude of the transmit leakage signal, and $\omega_{tx}$ is the frequency of the transmit leakage signal. As can been from Eq. 1, there are two components of the signal distortion from the transmit leakage signal, $A_{tx}^2(t)/2$ and $[A_{tx}^2(t)cos2\omega_{tx}]/2$; where the former is the IM2 distortion that falls directly at DC or baseband, and is effectively the square of the signal amplitude of the transmit leakage.

Most of the elements of TX path 112 and the RX path 110 are integrated on a Radio Frequency Integrated Circuit (RFIC) 434 contained on a single integrated silicon substrate. Alternatively, the elements of the TX path 112 and RX Path 110 can be configured in a hybrid fashion. Furthermore, RFIC 434 and BBIC 116 are coupled to each other.

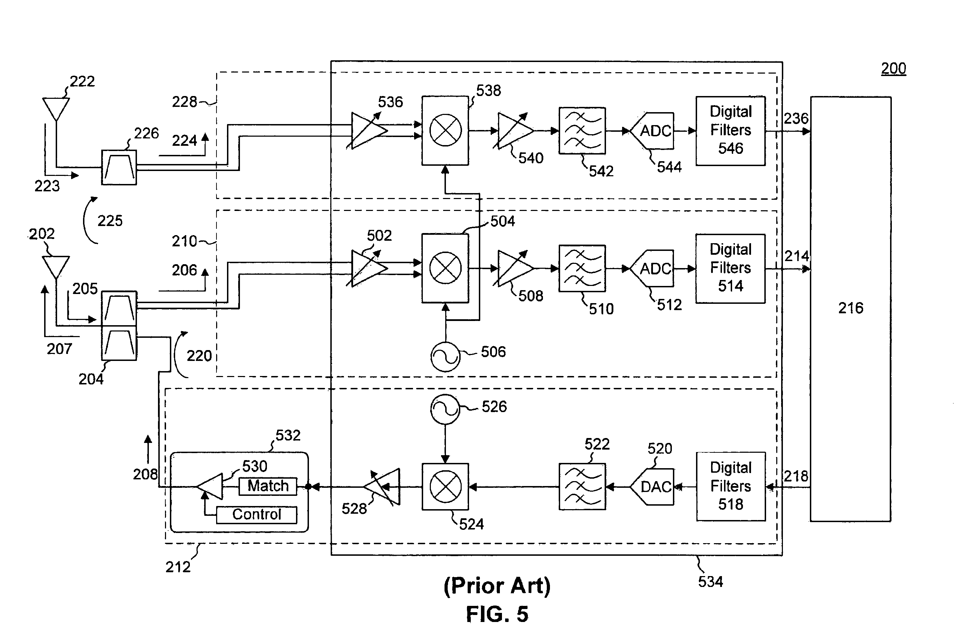

FIG. 5 is a further detailed block diagram of the known transceiver that is shown in FIG 2.

During the transmission through antenna 202, baseband TX signal 218 received from BBIC 216 is processed by the TX path 212 having digital filters 518, DAC 520, analog low-pass filter 522, up-converter mixer 524, and variable amplifier 528. Specifically, after digital filtering 518 and conversion to analog by DAC 520, the resulting analog signal is filtered by filter 522, and then up-converted by mixer 524 using LO 526. The up-converted output is provided to variable amplifier 528 that serves as a driver for the external power amplifier 530 within TX power control loop 532. The output TX signal 208 will be provided to the duplexer 204 which filters it and provides filtered TX signal 207 to the antenna 202 for transmission.

During receive through antenna 202, the RX signal 206 is processed by the RX path 212, having a variable gain amplifier 502, down-converter mixer 504, a variable gain amplifier 508, analog low-pass filter 510, ADC 512, and digital filters 514. Specifically, after amplification by variable amplifier 502, mixer 504 down-converts the received signal using local oscillator 506, the down-converted output of which is further amplified and filtered by amplifier 508 and analog filter 510, respectively. The ADC 512 receives the filtered baseband output and converts the baseband signal to digital, which is further filtered by digital filter 514, to produce the baseband signal 214 for BBIC 216.

During receive through antenna 222, the RX2 signal 224 is processed by the RX2 path 228, having a variable gain amplifier 536, down-converter mixer 538, a variable gain amplifier 540, analog low-pass filter 542, ADC 544, and digital filters 546. Specifically, after amplification by variable amplifier 536, mixer 538 down-converts the received signal using the local oscillator 506, the down-converted output of which is further amplified and filtered by amplifier 540 and analog filter 542, respectively. The ADC 544 receives the filtered baseband output and converts the baseband signal to digital, which is further filtered by digital filter 546, to produce the baseband signal 236 for BBIC 216.

As with FIG. 4, TX leakage signal 220 enters the receive path 210 due finite isolation of the duplexer 204. Further, TX leakage signal 225 enters receive path 228 due to finite antenna to antenna isolation. Given the relatively large signal strength of the TX leakage signals 220 and 225 respectively, signal distortion can occur in the RX paths 210 and 228 due to non-linear processing in the respective mixers 504 and 538, for the same reasons as discussed above for FIG.4.

Most of the elements of TX path 212, RX path 210, and RX path 228 are integrated on a Radio Frequency Integrated Circuit (RFIC) 534 disposed on a single integrated silicon substrate. Alternatively, the elements of the TX path 212, RX path 210, and RX Path 228 can be configured in a hybrid fashion. Furthermore, RFIC 534 and BBIC 216 are coupled to each other.

*IM2 Mitigation to Reduce Signal Distortion*

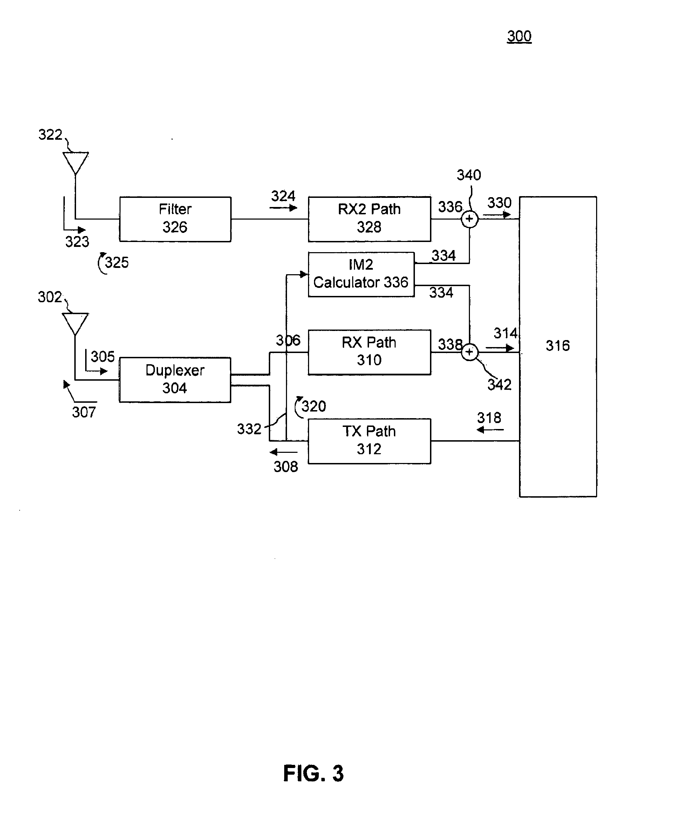

FIG. 3 is a block diagram of a transceiver, according to an embodiment of the present disclosure. The transceiver 300 includes an antenna 302 and a second antenna 322. The antenna 302 both transmits a TX signal 307 and receives a RX signal 305, while antenna 322 only receives a RX2 signal 323. During transmission through antenna 302, the BBIC 316 provides a baseband TX signal 318 to the TX path 312. The TX path 312 provides the TX signal 308 to the duplexer 304. After being filtered by one of the filters (not illustrated) in the duplexer 304, a filtered TX signal 307 is provided to the antenna 302 to transmit. A transmit path of transceiver 300 comprises of antenna 302, duplexer 304 and TX path 312.

During receive through antenna 302, after RX signal 305 is filtered by one of the filters (not illustrated) in the duplexer 304, a filtered RX signal 306 is then provided to a RX path 310. The RX path 310 processes the receive signal 306 to produce the RX baseband signal 338 that is provided to summer 342, and further processed as will be discussed below. A first receive path of the transceiver 300 comprises of antenna 302, duplexer 304, and RX path 310. Likewise, during receive through antenna 322, after RX2 signal 323 is filtered by filter 326, a filtered RX2 signal 324 is provided to a RX2 path 328. The RX path 328 processes the receive signal 324 to produce the RX baseband signal 336 that is provided to summer 340, and further processed as will be discussed below. A second receive path of the transceiver 300 comprises of antenna 322, filter 326 and RX path 328.

In the transceiver 300, some portions of the transmit signal energy from the transmit path are coupled into the first and second receive paths of the transceiver 300. The duplexer 304 is supposed separate the transmit and receive signals using filtering. However, the duplexer 304 provides finite isolation between the transmit path 312 and the first receive path 310, resulting in the TX leakage signal 320 entering the receive path 310. Furthermore, TX leakage signal 325 impacts the second receive path 328 that utilizes antenna 322 by virtue of the finite isolation between the respective antennas 302 and 322. Therefore, the two distinct receive paths 312 and 328 respectively are impacted by the TX leakage. As discussed above, TX leakage causes second order intermodulation (IM2) distortion that is generated by the mixers in the respective receive chains, where the IM2 distortion appears at baseband or DC in the frequency domain, and therefore overlaps the baseband spectrum. Accordingly, the baseband signals 338 and 336 each represent a sum of the desired receive baseband signal and IM2 distortion due to the respective TX leakages 320, 325.

To negate the effect of the TX leakages 320 and 325, a detector (not illustrated) within the TX path 312 is utilized to calculate an envelope 332 of the TX signal 308. The envelope 332 is provided to an IM2 calculation block 336. The IM2 calculation block 336 calculates an IM2 correction signal 334, which is subtracted from the receive baseband signals 338, 336 using respective summer units 342, 340. Once IM2 334 is subtracted from the respective baseband signals 338, 336, the remaining baseband signals 314, 330 have mitigated the IM2 distortion.

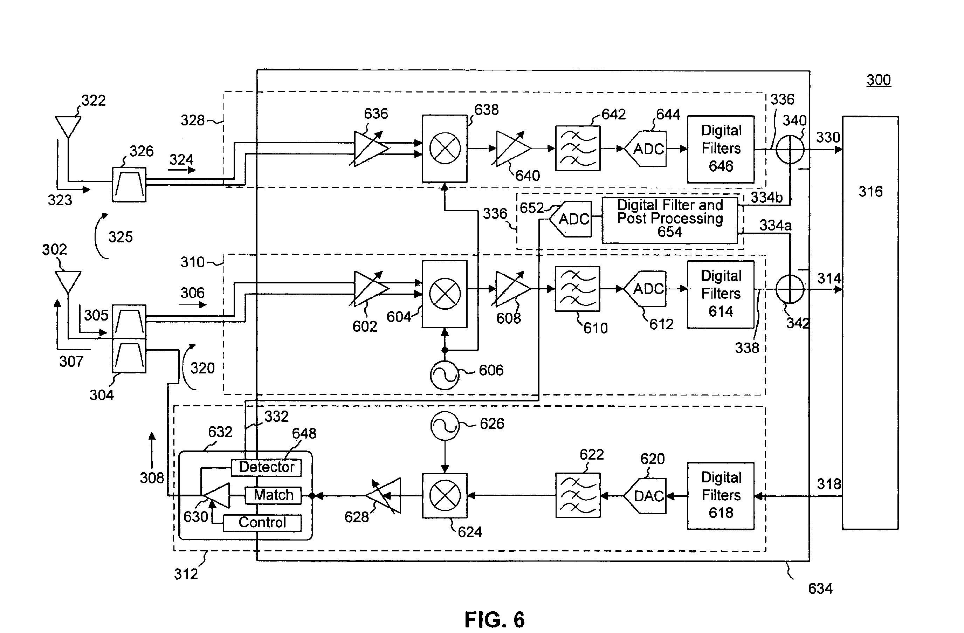

FIG. 6 is a further detailed block diagram of the transceiver 300 with IM2 mitigation, according to an embodiment of the present disclosure.

During the transmission via antenna 302, TX baseband signal 318 received from BBIC 316 is passed in the TX path 312 through digital filters 618, DAC 620, analog low-pass filter 622, up-converter mixer 624, and variable amplifier 628. Specifically, after digital filtering 618 and conversion to analog by DAC 620, the resulting analog signal is filtered by filter 622, and then up-converted by mixer 624 using LO 626. The up-converted output is provided to variable amplifier 628 that serves as a driver for the external power amplifier 630 within TX power control loop 632. The output TX signal 308 is provided to the duplexer 304, which filters it and provides filtered TX signal 307 to the antenna 302 for transmission.

Envelope detector 648 in TX power control loop 632 detects an amplitude envelope of the transmit signal 308, which is provided to the IM2 calculation module 336 as transmit envelope 332. The IM2 calculation module 336 determines the IM2 signal distortion that is generated by the transmit signal leakage. As indicated by Eq.1 above, the IM2 signal distortion that appears at baseband is dependent on, or proportional to, the square of the transmit signal amplitude. Therefore, after the transmit envelope 332 is digitized by ADC 652, the output is squared and filtered in the digital domain by the Digital Filter and Post Processor 654, to generate an IM2 correction signal 334. The IM2 correction signal 334 approximates the IM2 signal distortion that is generated due to $2^{nd}$ order non-linearity effects of the transmit leakage into the respective receiver chains of the transceiver 300. As will be shown, the IM2 correction signal is then used to compensate the receive baseband signals to remove the effects of the IM2 distortion. It is noted that the IM2 correction signal 334 can be tailored, or a amplitude scaled, for each of the two types transmit leakage 320, 325. Specifically, the duplexer generated transmit leakage 320 may have a different IM2 distortion effect than the antenna isolation leakage 325; and therefore two IM2 correction signals 334a and 334b may be generated, one for each receiver chain.

During receive through antenna 302, the RX signal 306 received by the RX path 310, is passed through a variable gain amplifier 602, down-converter mixer 604, a variable gain amplifier 608, analog low-pass filter 610, ADC 612, and digital filters 614. Specifically, after amplification by variable amplifier 602, mixer 604 down-converts the received signal using local oscillator 606, the down-converted output of which is further amplified and filtered by amplifier 608 and analog filter 610, respectively. The ADC 612 receives the filtered baseband output and converts the baseband signal to digital, which is further filtered by digital filter 614, to produce the baseband signal 338 that includes the IM2 effects from the transmit leakage 320. The summer 342 receives baseband signal 338 and the IM2 correction signal 334a, and subtracts the IM2 correction signal 334a from the receive baseband signal 338, so as to mitigate the effects of the IM2 distortion. It is noted that the IM2 correction signal 334a can be scaled as necessary to improve or optimize the IM2 mitigation.

During the receive through antenna 322, the RX2 signal 324 received by the RX2 path 328, is passed through a variable gain amplifier 636, down-converter mixer 638, a variable gain amplifier 640, analog low-pass filter 642, ADC 644, and digital filters 646. Specifically, after amplification by variable amplifier 636, mixer 638 down-converts the received signal using local oscillator 606, the down-converted output of which is further amplified and filtered by amplifier 640 and analog filter 642, respectively. The ADC 644 receives the filtered baseband output and converts the baseband signal to digital, which is further filtered by digital filter 646, to produce the baseband signal 336 that includes the IM2 effects from the transmit leakage 325. The summer 340 receives baseband signal 336 IM2 correction signal 334b, and subtracts the IM2 correction signal 334b from the receive baseband signal 336, so as to mitigate the effects of the IM2 distortion. It is noted that the IM2 correction signal 334b can be scaled as necessary to improve or optimize the IM2 mitigation.

The benefit of utilizing the output of the transmit power amplifier 630 to mitigate the IM2 distortion in the respective receiver paths, is that all the distortions in the transmit process are included in the transmit signal by the time it reaches the power amplifier 630, and therefore these distortions are reflected in the envelope signal 332. These distortions can include residual IQ gain and phase imbalance, low pass filter ripple and phase response, etc. Additionally, since output of detector 648 scales down when the transmit signal power goes down, the dynamic range of the IM2 mitigation only needs to cover a few dB at the sensitivity levels of the receivers. This approach provides the additional benefit that since the envelope only carries scalar parameters, phase alignment is not required for the mitigation of IM2.

Most of the elements of TX path 312, RX path 310, and RX path 328 are integrated on a Radio Frequency Integrated Circuit (RFIC) 634 disposed on a single integrated silicon substrate. Alternatively, the elements of the TX path 312, RX path 310, and RX Path 328 can be configured in a hybrid fashion. Furthermore, RFIC 634 and BBIC 316 are coupled to each other. In an embodiment, the TX Power Control Loop 632, including the power amplifier, may be physically located on the RFIC 634, or may be a separate component. Specifically, in one embodiment, all of the TX Power Control Loop 632, except the power amplifier 630 is located on the RFIC 634.

In the transmit path, for calculation of the envelope, the TX signal 308 can be presented as

$$r(t) = I(t)\cos\omega t + Q(t)\sin\omega t = R(t)\cos(\omega t + \varphi(t)) \quad (2)$$

The envelope 332 of the TX signal 308 is derived utilizing the following calculation:

$$R(t) = \sqrt{I^2(t) + Q^2(t)} \quad (3)$$

In the respective receive paths, IM2 components after down conversion by the respective down converters (604, 638) and analog low pass filtering by the respective filters(610, 642) can be represented as :

$$r^2(t) = [I(t)\cos\omega t + Q(t)\sin\omega t][I(t)\cos\omega t + Q(t)\sin\omega t] \quad (4)$$

Then passing the derived signals through the respective digital filters (614, 646) in the receive paths, IM2 is derived as:

$$IM2 = [I^2(t) + Q^2(t)] \quad (5)$$

Therefore, for purposes of canceling IM2 within the respective receive paths, utilizing equations 3 and 5, an IM2 value can be shown be the square of the amplitude envelope of the TX signal 308, as shown in equation 6 below.

$$IM2 = R^2(t) \quad (6)$$

The TX signal 308 can be utilized to calculate the IM2 for both the first receive path 310 and the second receive path 328. IM2 of filtered TX signal 307 does not differ from TX signal 308, as the filtering by the duplexer 304 does not change the IM2 properties. Accordingly, TX signal 308 and filtered TX signal 307 would have the same impact on the respective receive paths with regards to IP2, and as such values derived from TX signal 308 can be utilized with respect to both of the receive paths. However, individual scaling of the IM2 correction signal 334 can be implemented as discussed above.

In an embodiment, a transceiver may contain a plurality of transmit paths, and similar concepts to cancel IM2 can be applied with respect to each transmit path's IM2 effect on the receive paths.

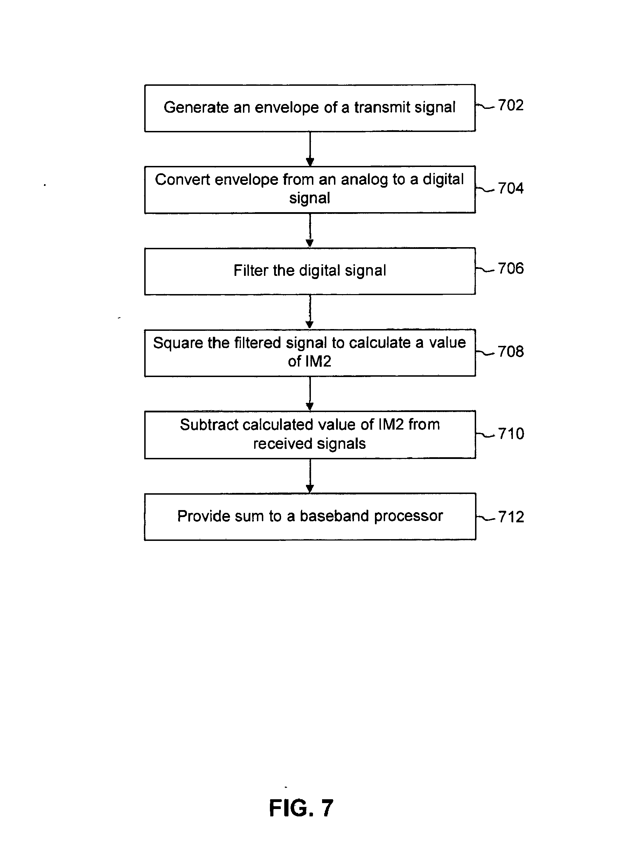

FIG. 7 shows a flowchart providing example steps for mitigation of IM2 in a transceiver environment, according to an embodiment of the present disclosure.

Step 702 comprises of calculation of an envelope of a transmit signal. For example in FIG. 6, the envelope detector 648 generates the value of the envelope 332 from the TX signal 308 in analog form.

In step 704, the envelope is converted from an analog to a digital signal. For example in FIG. 6, the ADC 652 converts the outputted calculated envelope 332 to a digital signal.

In step 706, the digital signal is filtered. For example in FIG 6, the digital signal is provided to the Digital Filters and post processing block 654, where it is first filtered.

In step 708, the filtered signal is squared to calculate a value of IM2. For example in FIG 6, within the Digital Filters and post processing block 654, the filtered signal is then squared to calculate a value of IM2.

In step 710, the calculated value of IM2 is subtracted from received signals. For example in FIG 6, the value of IM2 334 is provided to sum units 342 and 340. The respective sum units subtract the value of IM2 334 from the respective signals (338, 336) to generate IM2 corrected receive signals 314, 330.

In Step 712, the IM2 corrected receive signals are provided to a baseband processor. For example in FIG 6, baseband RX signal 314 and baseband RX signal 330 are provided to the BBIC 316 from the respective sum units (342, 340).

The described IM2 mitigation method and structure may be implemented in radio and other related communication equipment, specifically 28 nm radio.

*IM2 Mitigation with Envelope Detection in the Receive Path*

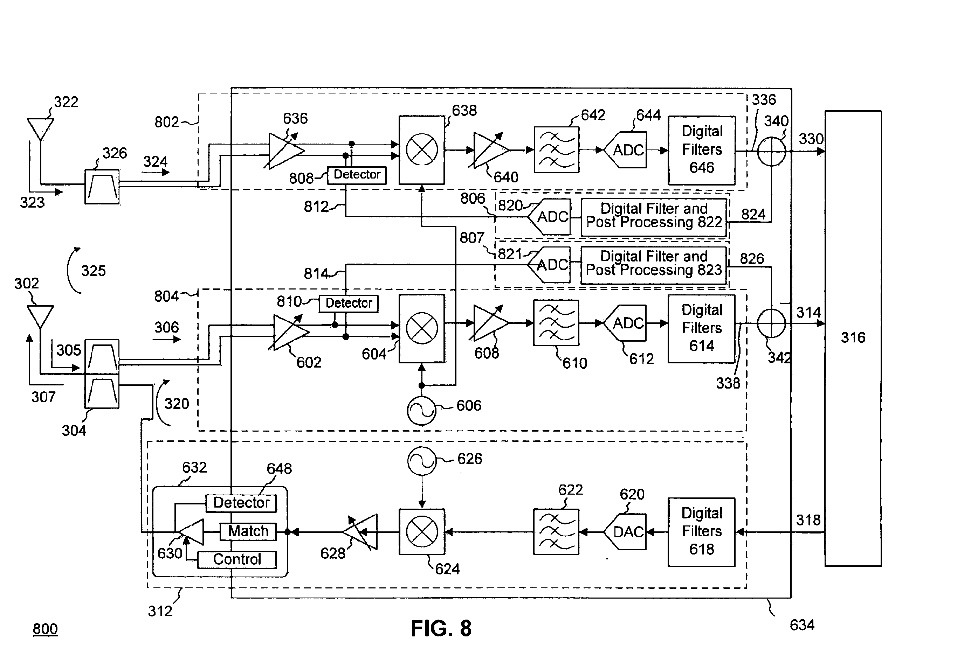

As discussed above, FIG.6 illustrates the envelope detection at the output of the power amplifier 630 in the transmit path. In another embodiment, the transmit signal envelope is detected in the respective receive paths, as shown in FIG. 8. Referring to FIG. 8, the envelope detectors 810 and 808 are placed in respective receive paths 804 and 802. Specifically, in one embodiment the envelope detectors 810, 808 are placed at the respective outputs of variable amplifiers 602 and 636. The envelope detectors 810, 808 generate respective receive envelope signals 814, 812 that are sent to respective IM2 calculation modules 807, 806 to generate IM2 correction signals 826 and 824. The IM2 calculation modules 807, 806 respectively include ADCs 821, 820 and Digital Filtering and Processing Modules 823, 822, and operate in a similar fashion to IM2 calculation module 336 in FIG. 6. The resulting IM2 correction signals 826 and 824 are sent to the summers 342, 340 to mitigate the IM2 distortion in the respective receive paths 804, 802.

The advantage of envelope detection in the receive paths is that this configuration captures any passband variation in the duplexer 304 or the bandpass filter 326, so that it is reflected in the corresponding envelope signals 814 and 812. In other words, if the passband response of the duplexer 304 or bandpass filter 326 varies over frequency, then this will have an effect on the IM2 distortion caused by the transmit leakage signals 320 and 325, as they are processed by the respective receive paths 804, 802. By measuring the envelope just before the input of the respective mixers 604, 638, then this passband variation will be captured by the respective envelopes 814, 812 and provide a more accurate IM2 mitigation.

*Conclusion*

While various embodiments have been described above, it should be understood that they have been presented by way of example only, and not limitation. It will be apparent to persons skilled in the relevant art that various changes in form and detail can be made therein without departing from the spirit and scope of the various embodiments. Thus, the breadth and scope of the present disclosure should not be limited by any of the above-described exemplary embodiments, but should be defined only in accordance with the following claims and their equivalents.

**Claims**

1. A transceiver, comprising:

   a transmit path configured to transmit a transmit signal through an antenna, the transmit path including,
   a power amplifier configured to couple to the antenna, and amplify the transmit signal prior to transmission;
   an envelope detector configured to detect an envelope of the transmit signal at the output of the power amplifier;
   a receive path configured to receive a receive signal from the antenna and to output a receive baseband signal, the receive path also receiving a transmit leakage signal from said transmit path, the receive path including
   a second order intermodulation (IM2) calculation module configured to square the envelope of the transmit signal to produce an IM2 correction signal, the IM2 correction signal representative of signal distortion caused by the transmit leakage signal;
   a summer module to subtract IM2 correction signal from the digital receive signal.

2. The transceiver of claim 1, wherein the envelope detector is part of a power control loop providing power control for the transmit signal.

3. The transceiver of claim 1, wherein the IM2 calculation module, comprises:

an analog-to-digital converter (ADC) configured to digitize the envelope of the transmit signal;

a processor module configured to square the digitized envelope of the transmit signal to generate the IM2 correction signal.

4. The transceiver of claim 3, wherein the processor is further configure to scale the IM2 correction signal in amplitude to improve mitigation of the signal distortion caused by the transmit leakage signal.

5. The transceiver of claim 1, the duplexer coupled to the transmit path at a first port of the duplexer, the receive path at a second port of the duplexer, and the input port of the antenna at a third port of the duplexer, further comprising a duplexer configured to separate the transmit and receive signals an input port of the antenna.

6. The transceiver of claim 5, wherein the duplexer leaks a portion of the transmit signal from the first port to the second port to cause the transmit leakage signal in the receive path.

7. The transceiver of claim 1, further comprising a second receive path configured to receive a second receive signal from a second antenna and to output a second receive baseband signal, the receive path also receiving a second transmit leakage signal caused by insufficient isolation between the first and second antennas.

8. The transceiver of claim 7, the second receive path further comprising:

a second IM2 correction module configured to generate a second IM2 correction signal, the second IM2 correction signal representative of signal distortion caused by the second transmit leakage signal in the second receive path; and

a second summer module configured to subtract the second IM2 correction signal from the second receive baseband signal.

9. A transceiver, comprising:

a transmit path configured to transmit a transmit signal through an antenna, the transmit path including,

a power amplifier configured to couple to the antenna and amplify the transmit signal prior to transmission;

a receive path configured to receive a receive signal from the antenna and to output a receive baseband signal, the receive path also receiving a transmit leakage signal from the transmit path, the receive path including,

an envelope detector configured to detect an envelope of the transmit leakage signal;

a second order intermodulation (IM2) calculation module configured to square the envelope of the transmit leakage signal to produce an IM2 correction signal, the IM2 correction signal representative of signal distortion caused by the transmit leakage signal;

a summer module to subtract IM2 correction signal from the digital receive signal.

10. The transceiver of claim 9, wherein the IM2 calculation module, comprises:

an ADC configured to digitize the envelope of the transmit signal;

a processor module configured to square the digitized envelope of the transmit signal to generate the IM2 correction signal.

11. The transceiver of claim 10, wherein the processor is further configure to scale the IM2 correction signal in amplitude to improve mitigation of the signal distortion caused by the transmit leakage signal.

12. The transceiver of claim 9, wherein the receive path further comprises:

a variable gain amplifier coupled to the antenna, for amplifying the receive signal;

wherein the envelope detector detects the envelope of the transmit leakage signal at the output of the variable gain amplifier.

13. A method for reducing second order intermodulation (IM2) in a receiver portion of a transceiver, comprising:

detecting an envelope of a transmit signal that is generated in a transmitter portion of the transceiver;

converting the detected envelope from an analog signal to a digital signal;

filtering the digital signal;

squaring the filtered signal to produce an IM2 correction signal, the IM2 signal representative of signal distortion caused by leakage of the transmit signal into the receiver portion of the transceiver; and

subtracting the IM2 signal from a received signal to produce a baseband received signal.

14. The method of claim 13, wherein the distortion is second order distortion caused by a mixer in the receiver portion operating on the leakage of the transmit signal into the receiver portion.

15. The method of claim 13, further comprising:

subtracting the IM2 signal from a second received signal to produce a second baseband receive signal; and

wherein the first receive signal is processed by a first receive path of the transceiver, and

wherein the second receive signal is processed by a second receive path of the transceiver.

**(Prior Art)**

**FIG. 1**

(Prior Art)

FIG. 2

**FIG. 3**

(Prior Art)

FIG. 4

(Prior Art)
FIG. 5

**FIG. 6**

EP 2 605 411 A2

```
┌─────────────────────────────────────────┐
│  Generate an envelope of a transmit signal │──702
└─────────────────────────────────────────┘
                    │
                    ▼
┌─────────────────────────────────────────┐
│  Convert envelope from an analog to a digital │──704
│                  signal                   │
└─────────────────────────────────────────┘
                    │
                    ▼
┌─────────────────────────────────────────┐
│         Filter the digital signal         │──706
└─────────────────────────────────────────┘
                    │
                    ▼
┌─────────────────────────────────────────┐
│  Square the filtered signal to calculate a value │──708
│                 of IM2                    │
└─────────────────────────────────────────┘
                    │
                    ▼
┌─────────────────────────────────────────┐
│     Subtract calculated value of IM2 from  │──710
│              received signals             │
└─────────────────────────────────────────┘
                    │
                    ▼
┌─────────────────────────────────────────┐
│   Provide sum to a baseband processor     │──712
└─────────────────────────────────────────┘
```

**FIG. 7**

**FIG. 8**

800